# EUROPÄISCHE PATENTANMELDUNG

(11) **EP 1 630 078 A1**
(43) Veröffentlichungstag der Anmeldung: **01.03.2006**
(21) Anmeldenummer: 05017760.9
(22) Anmeldetag: 16.08.2005
(51) Int. Cl.: B62D 25/24, B60R 13/08, B65D 39/04, F16B 5/06

(54) **Verschlussdeckel zum Verschliessen einer Öffnung eines Fahrzeugbauteils**

(30) Priorität: 23.08.2004 DE 202004013208 U
(71) Anmelder: Carcoustics Tech Center GmbH, 51381 Leverkusen (DE)
(72) Erfinder: Dünser, Jarno, Klaus 6833 Vorarlberg (AT)
(74) Vertreter: Cohausz & Florack

(57) **Zusammenfassung**

Die Erfindung betrifft einen Verschlussdeckel (1) zum verschließen einer Öffnung (2) eines Fahrzeugbauteils (3), insbesondere einer Öffnung einer textilen Radlaufschale, mit einem Deckelteil (5) und mindestens einem von der Unterseite des Deckelteils abstehenden Rastelement (6), das relativ zum Deckelteil elastisch verformbar ist. Damit ein solcher Verschlussdeckel leicht montierbar und mehrfach wiederapplizierbar ist, sowie eine zuverlässige Befestigung an der zu verschließenden Öffnung gewährleistet, sieht die Erfindung vor, dass dem Rastelement (6) mindestens ein Klemmelement (8) zugeordnet ist, welches mit einem mit dem Deckelteil (5) verbundenen Knickhebelmechanismus (8.1, 8.2, 8.3) versehen ist, durch den das Klemmelement (8) gegen die Rückseite des Fahrzeugbauteils (3) bewegbar ist, wobei der Knickhebelmechanismus einen Ansatz (9) aufweist, der als Anschlag bei der Montage des Verschlussdeckels dient, und an dem Knickhebelmechanismus eine Ausnehmung (10) ausgebildet ist, in welche das Rastelement (6) einrastbar ist.

## Beschreibung

Die Erfindung betrifft einen Verschlussdeckel zum Verschließen einer Öffnung eines Fahrzeugbauteils, insbesondere einer öffnung einer textilen Radlaufschale, mit einem Deckelteil und mindestens einem von der Unterseite des Deckelteils abstehenden Rastelement, das relativ zum Deckelteil elastisch verformbar ist.

Verkleidungsteile von Kraftfahrzeugen sind zu Wartungs- und Reparaturzwecken häufig mit Zugangsöffnungen versehen, die durch bewegliche oder abnehmbare Kappen oder Deckel verschließbar sind. So sind beispielsweise textile Radlaufschalen, die als Steinschlagschutz und auch zur Verminderung der von den Fahrzeugreifen ausgehenden Laufgeräusche in Radkästen eingebaut werden, bei Bedarf mit einer Zugangsöffnung versehen, welche den Austausch einer Blinkerlampe ohne den Ausbau der Radlaufschale gestattet. Diese Zugangsöffnung ist durch einen demontierbaren Verschlussdeckel verschlossen, um die hinter der Radlaufschale befindlichen Teile vor Verschmutzung und Steinschlag zu schützen.

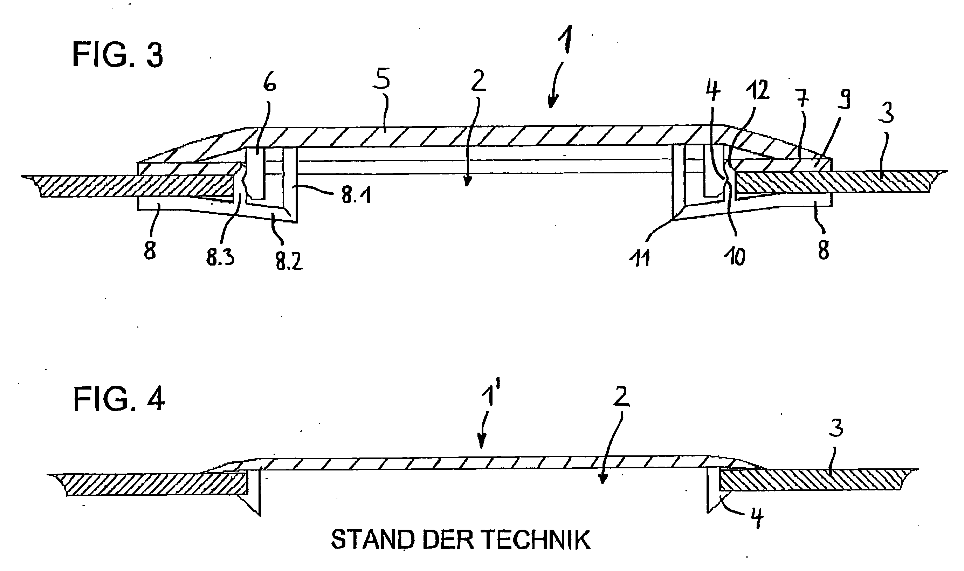

Aus der Praxis ist ein Verschlussdeckel zum Verschließen einer Öffnung in einer textilen Radlaufschale bekannt, der die in der beigefügten Fig. 4 dargestellte Ausführung besitzt. Der bekannte Verschlussdeckel 1' ist aus Kunststoff im Spritzgießverfahren hergestellt und in einer Zugangsöffnung 2 der Radlaufschale 3 verrastbar. Die Verrastung erfolgt über eine relativ kleine Rastnase 4. Es hat sich gezeigt, dass dieser bekannte Verschlussdeckel bei Vibrationen, Spannungen, Verformungen, insbesondere klimaabhängigen Verformungen der textilen Radlaufschale sowie Bauteiltoleranzen aus der Öffnung herausfallen kann. Dies kann der relativ knappen Überlappung zwischen Rastnase 4 und Radlaufschale 3 zugeschrieben werden. Eine Vergrößerung der Überlappung ist allerdings kaum möglich, da dann die Montage des Verschlussdeckels 1' nicht mehr funktionieren würde. Zur Überwindung der vorgegebenen Materialüberschneidung erfordert die Verrastung des Verschlussdeckels 1' bereits einen erheblichen Kraftaufwand, weshalb seine Verrastung mittels einer kostenintensiven pneumatischen Eindrückstation erfolgt. Dabei ist zu auch berücksichtigen, dass der Deckel 1' im eingebauten Zustand der Radlaufschale 3 mehrfach wieder montierbar sein muss, und zwar ohne dass an der Rückseite der Radlaufschale 3 eine die Montage erleichternde Zugänglichkeit besteht.

Davon ausgehend liegt der vorliegenden Erfindung die Aufgabe zugrunde, einen Verschlussdeckel der eingangs genannten Art zu schaffen, der leicht montierbar und mehrfach wiederapplizierbar ist sowie eine zuverlässige Befestigung an der zu verschließenden Öffnung gewährleistet.

Gelöst wird diese Aufgabe durch einen Verschlussdeckel mit den Merkmalen des Anspruchs 1. Der erfindungsgemäße Verschlussdeckel ist im wesentlichen dadurch gekennzeichnet, dass dem Rastelement mindestens ein Klemmelement zugeordnet ist, welches mit einem mit dem Deckelteil verbundenen Knickhebelmechanismus versehen ist, durch den das Klemmelement gegen die Rückseite des Fahrzeugbauteils bewegbar ist, wobei der Knickhebelmechanismus einen Ansatz aufweist, der als Anschlag bei der Montage des Verschlussdeckels dient, und an dem Knickhebelmechanismus eine Ausnehmung ausgebildet ist, in welche das Rastelement einrastbar ist.

Der erfindungsgemäße Verschlussdeckel lässt sich einseitig, d.h. ohne Zugang zur Rückseite des betreffenden Fahrzeugbauteils, mit geringem Kraftaufwand und ohne Zuhilfenahme von Zusatzelementen wie Clipse, Schrauben, Spangen, Gegenrahmen und dergleichen montieren. Er bietet eine ausreichende Überlappung zwischen Klemmelement und Fahrzeugbauteil bzw. textiler Radlaufschale, so dass ein zuverlässiger Verschluss der betreffenden Öffnung auch bei üblichen Bauteiltoleranzen sowie Vibrationen, Spannungen und Verformungen des Fahrzeugbauteils bzw. der Radlaufschale sichergestellt ist.

Der Knickhebelmechanismus des erfindungsgemäßen Verschlussdeckels kann auf verschiedene Weise realisiert werden. Nach einer bevorzugten Ausgestaltung besteht der Knickhebelmechanismus aus einem ersten Abschnitt, der mit dem Deckelteil verbunden ist, einem zweiten Abschnitt, der das Klemmelement umfasst, und einem dritten Abschnitt, der von dem zweiten Abschnitt abzweigt und mit dem als Anschlag dienenden Ansatz verbunden ist, wobei der erste Abschnitt und der zweite Abschnitt über eine erste Knickstelle und der dritte Abschnitt und der als Anschlag dienende Ansatz über eine zweite Knickstelle gelenkig miteinander verbunden sind.

Die Knickstellen sind vorzugsweise jeweils in Form eines Filmscharniers bzw. einer geradlinigen Nut oder Materialverdünnung ausgebildet.

Eine weitere bevorzugte Ausgestaltung des erfindungsgemäßen Verschlussdeckels besteht darin, dass der erste und der zweite Abschnitt des Knickhebelmechanismus im demontierten Zustand des Verschlussdeckels einen stumpfen Knickwinkel bilden, wobei die Spitze des Knickwinkels zur Mitte des Deckelteils hin gerichtet ist. Hierdurch wird eine bestimmte Auslenkbewegung des Knickhebelmechanismus während der Montage des Verschlussdeckels vorgegeben, so dass die Montage besonders leicht ist.

Eine andere vorteilhafte Ausgestaltung besteht darin, dass der zweite Abschnitt und der dritte Abschnitt des Knickhebelmechanismus in Richtung des Klemmelements einen spitzen Winkel bilden. Hierdurch lässt sich bei verschieden dicken Fahrzeugbauteilen jeweils eine spielfreie Klemmung des Fahrzeugbauteils im Bereich der zu verschließenden Öffnung erzielen.

Das Klemmelement wird vorzugsweise so dimensioniert, dass es sich im Einbauzustand des Verschlussdeckels etwa bis an den Randumfang des Deckelteils erstreckt.

In einer weiteren bevorzugten Ausgestaltung der Erfindung liegt der Deckelteil im montierten Zustand des Verschlussdeckels an dem als Anschlag dienenden Ansatz des Knickhebelmechanismus an, wobei der Ansatz vorzugsweise als ringscheibenförmiger Rahmen ausgebildet ist. Diese Ausgestaltung verleiht dem Verschlussdeckel eine hervorragende Stabilität und verhindert zuverlässig das Eindringen von Schmutz in die mit dem verschlussdeckel versehene Öffnung.

Nachfolgend wird die Erfindung anhand einer ein Ausführungsbeispiel darstellenden Zeichnung näher erläutert. Es zeigen:
- Fig. 1: eine Schnittansicht eines erfindungsgemäßen Verschlussdeckels in einer Anfangsphase der Montage an einer zu verschließenden Zugangsöffnung eines Verkleidungsteils;
- Fig. 2: eine Schnittansicht des Verschlussdeckels gemäß Fig. 1 in einer Zwischenphase der Montage;
- Fig. 3: eine gegenüber den Figuren 1 und 2 vergrößerte Schnittansicht des Verschlussdeckels im montierten Zustand; und
- Fig. 4: eine Schnittansicht eines herkömmlichen Verschlussdeckels zum Verschließen einer Zugangsöffnung einer textilen Radlaufschale im montierten Zustand.

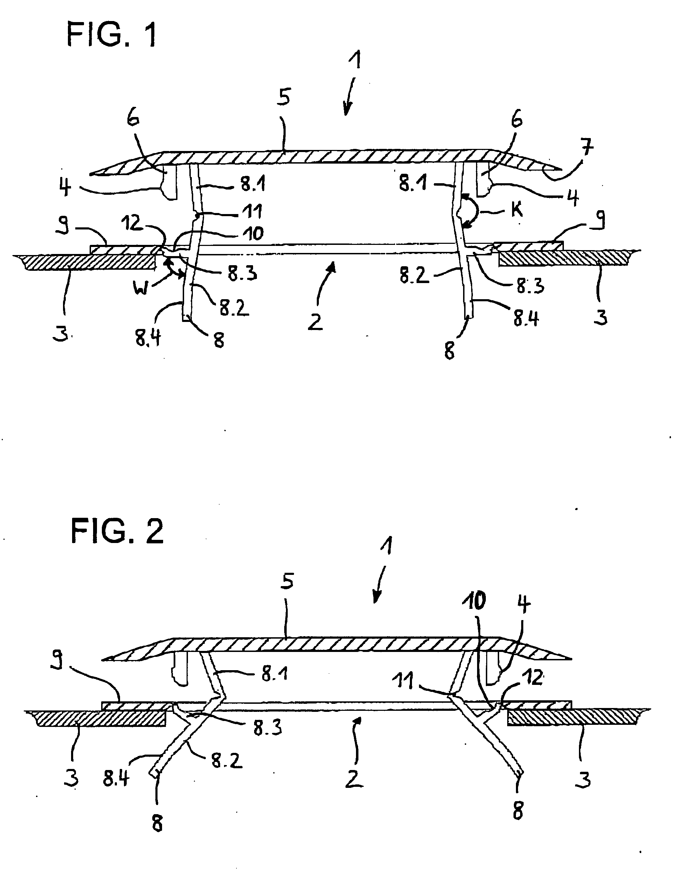

Der in den Figuren 1 bis 3 dargestellte Verschlussdeckel 1 dient dem Verschluss einer Öffnung 2 in einer textilen Radlaufschale 3 eines Kraftfahrzeuges, durch die eine Blinkerlampe ausgewechselt werden kann. Der Verschlussdeckel 1 kann jedoch auch zum Verschließen einer Öffnung in einem anderen Verkleidungsteil eines Fahrzeuges verwendet werden.

Der einteilig aus Kunststoff hergestellte Verschlussdeckel 1 besitzt ein Deckelteil 5 und mehrere daran angeformte Rastelemente 6, die jeweils relativ zum Deckelteil 5 elastisch verformbar sind. Der Deckelteil 5 ist im wesentlich flach ausgebildet und weist durch einen umlaufend gekrümmten Randbereich eine Schalenform auf. Die umlaufende Unterkante 7 ist im wesentlichen eben ausgebildet, so dass sich dort eine ebene, ringförmige Dichtfläche ergibt. Der Durchmesser des im wesentlichen scheibenförmigen Deckelteils 5 ist größer als der Durchmesser (Innendurchmesser) der zu verschließenden Öffnung 2. Der Deckelteil 5 kann grundsätzlich eine beliebige Form aufweisen. Er kann insbesondere kreisförmig, oval oder rechteckig ausgebildet sein. Im montierten Zustand ist der scheibenförmige Deckelteil 5 an der Außenseite der Radlaufschale bzw. des die Öffnung 2 aufweisenden eines Fahrzeugbauteils 3 angeordnet.

Die Enden der arm- bzw. schenkelartigen Rastelemente 6 sind mit nach außen gerichteten Rastnasen 4 versehen. Die Rastelemente 6 stehen im wesentlichen senkrecht von der Unterseite des Deckelteils 5 ab, wobei ihre Enden einschließlich der daran ausgebildeten Rastnasen 4 über die Unterkante 7 des Deckelteils 5 vorragen. Die Rastnasen 4 sind somit in senkrechtem Abstand zur Ebene der Unterkante bzw. ringförmigen Dichtfläche 7 des Deckelteils 5 angeordnet. Die Rastelemente 6 wirken wie Schnapphaken.

Den Rastelementen 6 ist jeweils ein Klemmelement bzw. Klemmhalter 8 zugeordnet. Das Klemmelement 8 ist mit einem mit dem Deckelteil 5 verbundenen Knickhebelmechanismus versehen, durch den das Klemmelement 8 gegen die Rückseite der textilen Radlaufschale 3 bewegbar ist. Der Knickhebelmechanismus weist einen Ansatz 9 auf, der als Anschlag bei der Montage des einteiligen Verschlussdeckels 1 dient und in diesem Ausführungsbeispiel als ringförmiger Rahmen ausgebildet ist. Ferner ist an dem Knickhebelmechanismus jeweils eine Ausnehmung 10 ausgebildet, in welche das Rastelement 6 einrastbar ist.

Der Knickhebelmechanismus des jeweiligen Klemmelements 8 besteht aus einem ersten Abschnitt 8.1, der mit dem Deckelteil 5 verbunden ist, einem zweiten Abschnitt 8.2, der das Klemmelement 8 umfasst, und einem dritten Abschnitt 8.3, der von dem zweiten Abschnitt 8.2 abzweigt und mit dem als Anschlag dienenden Ansatz 9 verbunden ist. Die ersten Abschnitte 8.1 der Knickhebelmechanismen sind zwischen den Rastelementen 6 und beabstandet zu diesen angeordnet. Die der Rastnase 4 zugeordnete Ausnehmung 10 ist in dem dritten Abschnitt 8.3 des Knickhebelmechanismus ausgebildet.

Der erste Abschnitt 8.1 und der zweite Abschnitt 8.2 sind über eine erste Knickstelle 11 und der dritte Abschnitt 8.3 und der als Anschlag dienende Ansatz 9 über eine zweite Knickstelle 12 miteinander verbunden. Die Knickstellen 11 und 12 sind jeweils nach Art eines Filmscharniers durch eine geradlinige, keilförmige Nut bzw. Materialverdünnung realisiert.

Nachfolgend wird der Montageablauf des einteiligen Verschlussdeckels 1 beschrieben.

Vor der Montage weist der Deckel 1 die in Fig. 1 dargestellte Ausgangsstellung auf. Es ist zu erkennen, dass der erste Abschnitt 8.1 und der zweite Abschnitt 8.2 des Knickhebelmechanismus im demontierten Zustand, d.h. in der Ausgangsstellung des Verschlussdeckels 1 einen stumpfen Knickwinkel K bilden, dessen Spitze zur Mitte des Deckelteils 5 hin gerichtet ist. Ferner ist zu erkennen, dass der zweite Abschnitt 8.2 und der dritte Abschnitt 8.3 des Knickhebelmechanismus in Richtung des Klemmelements 8 einen spitzen Winkel W bilden. Die Klemmflächen 8.4 an den zweiten Abschnitten 8.2 sind zur Mitte des Deckelteils 5 hin leicht abgewinkelt.

In dieser Ausgangsstellung, in der der Knickhebelmechanismus auseinandergeklappt ist, ist der Abstand der Klemmelemente 8 bzw. Klemmflächen 8.4 zueinander deutlich kleiner als der Durchmesser der zu verschließenden Öffnung 2 in der textilen Radlaufschale 3. Im auseinandergeklappten Zustand der Knickhebel besteht zwischen dem Innenrand der Öffnung 2 und den Klemmflächen 8.4 somit ein großzügiger Freiraum, so dass die Klemmelemente 8 ohne hohen Kraftaufwand in die zu verschließende Öffnung 2 eingeführt werden können. Der erfindungsgemäße Verschlussdeckel 1 kann daher leicht positioniert werden.

Die Klemmelemente 8 werden so tief in die Öffnung 2 der Radlaufschale 3 eingeführt, bis der am dritten Abschnitt 8,3 des Knickhebelmechanismus angeordnete Ansatz bzw. ringförmige Rahmen 9 als Anschlag an der Vorderseite der Radlaufschale 3 anliegt (vgl. Fig. 1).

wird der Deckelteil 5 des Verschlussdeckels 1 sodann auf die Radlaufschale 3 bzw. den ringförmigen Rahmen 9 gedrückt, so bewirkt der Knickhebelmechanismus, dass die Knickstellen 11 zunächst zur Mitte des Deckelteils 5 hin ausgelenkt und die Klemmelemente 8 hinter die Radlaufschale 3 bewegt werden (vgl. Fig. 2).

In Fig. 3 ist die Endlage des montierten Verschlussdeckels 1 dargestellt. In der Endlage rasten die Rastelemente 6 mit ihren Rastnasen 4 in den Ausnehmungen 10 ein. Beim Einrasten zentriert sich der Verschlussdeckel 1 in der Öffnung von selbst. Der Deckelteil 5 des Verschlussdeckels 1 liegt dann mit seiner ebenen Unterkante 7 dicht am Ringrahmen 9 an und die Klemmelemente 8 klemmen zusammen mit dem Ringrahmen 9 den Randbereich um die Öffnung 2 der Radlaufachale 3 ein, wobei die ersten Abschnitte 8.1 des Knickhebelmechanismus wieder in ihre Ausgangsstellung gemäß Fig. 1 zurückgekehrt sind.

Wie in Fig. 3 dargestellt, sind die Klemmelemente (Klemmhalter) 8 und der Ringrahmen 9 vorzugsweise so dimensioniert, dass sie sich im montierten Zustand des verschlussdeckels 1 jeweils bis an den Randumfang des Deckelteils 5 erstrecken. In jedem Fall bietet der erfindungsgemäße Verschlussdeckel 1 eine ausreichend breite Materialüberlappung zwischen dem jeweiligen Klemmelement 8 und der Radlaufschale 3, so dass der Verschlussdeckel 1 auch bei einer klimabedingten Verformung der Radlaufschale 3 nicht aus der Öffnung 2 ausknüpft.

Das Deckelteil 5, die Rastelemente 6 sowie die Klemmelemente 8 des Verschlussdeckels können zusammen einstückig spritzgegossen sein. Es ist allerdings auch möglich, das Deckelteil 5, die Rastelemente 6 und/oder die Klemmelemente voneinander getrennt herzustellen und diese Teile später zu dem einteiligen verschlussdeckel als Endprodukt zu verbinden.

Die Erfindung ist in ihrer Ausführung nicht auf das vorstehend beschriebene Ausführungsbeispiel beschränkt. Vielmehr sind mehrere Varianten denkbar. So kann der Verschlussdeckel 1 beispielsweise auch mehr als zwei Klemmelemente 8 mit entsprechendem Knickhebelmechanismus und entsprechend viele Rastelemente 6 aufweisen. Die Anzahl und die Größe der Klemmelemente 8 werden je nach Bedarf gewählt.

## Patentansprüche

1. Verschlussdeckel (1) zum Verschließen einer Öffnung (2) eines Fahrzeugbauteils (3), insbesondere einer Öffnung einer Radlaufschale, mit einem Deckelteil (5) und mindestens einem von der Unterseite des Deckelteils abstehenden Rastelement (6), das relativ zum Deckelteil (5) elastisch verformbar ist,
**dadurch gekennzeichnet, dass**
dem Rastelement (6) mindestens ein Klemmelement (8) zugeordnet ist, welches mit einem mit dem Deckelteil (5) verbundenen Knickhebelmechanismus (8.1, 8.2, 8.3) versehen ist, durch den das Klemmelement (8) gegen die Rückseite des Fahrzeugbauteils (3) bewegbar ist, wobei der Knickhebelmechanismus einen Ansatz (9) aufweist, der als Anschlag bei der Montage des Verschlussdeckels dient, und an dem Knickhebelmechanismus eine Ausnehmung (10) ausgebildet ist, in welche das Rastelement (6) einrastbar ist.

2. Verschlussdeckel nach Anspruch 1,
**dadurch gekennzeichnet, dass**
der Knickhebelmechanismus einen ersten Abschnitt (8.1), der mit dem Deckelteil (5) verbunden ist, einen zweiten Abschnitt (8.2), der das Klemmelement (8) umfasst, und einen dritten Abschnitt (8.3), der von dem zweiten Abschnitt (8.2) abzweigt und mit dem als Anschlag dienenden Ansatz (9) verbunden ist, aufweist, wobei der erste Abschnitt (8.1) und der zweite Abschnitt (8.2) über eine erste Knickstelle (11) und der dritte Abschnitt (8.3) und der als Anschlag dienende Ansatz (9) über eine zweite Knickstelle (12) gelenkig miteinander verbunden sind.

3. Verschlussdeckel nach Anspruch 2,
**dadurch gekennzeichnet, dass**
die Knickstellen (11, 12) jeweils in Form eines Filmscharniers ausgebildet sind.

4. Verschlussdeckel nach Anspruch 2 oder 3,
**dadurch gekennzeichnet, dass**
der erste Abschnitt (8.1) und der zweite Abschnitt (8.2) des Knickhebelmechanismus im demontierten Zustand des Verschlussdeckels (1) einen stumpfen Knickwinkel (K) bilden, wobei die Spitze des Knickwinkels (K) zur Mitte des Deckelteils (5) hin gerichtet ist.

5. Verschlussdeckel nach einem der Ansprüche 2 bis 4,
**dadurch gekennzeichnet, dass**
der zweite Abschnitt (8.2) und der dritte Abschnitt (8.3) des Knickhebelmechanismus in Richtung des Klemmelements (8) einen spitzen Winkel (W) bilden.

6. Verschlussdeckel nach einem der Ansprüche 1 bis 5,
**dadurch gekennzeichnet, dass**
der als Anschlag dienende Ansatz (9) als ringförmiger Rahmen ausgebildet ist.

7. Verschlussdeckel nach einem der Ansprüche 1 bis 6,
**dadurch gekennzeichnet, dass**
der Deckelteil (5) im montierten Zustand des Verschlussdeckels (1) an dem als Anschlag dienenden Ansatz (9) anliegt.

8. Verschlussdeckel nach einem der Ansprüche 1 bis 7,
**dadurch gekennzeichnet, dass**
sich das Klemmelement (8) im montierten Zustand des Verschlussdeckels (1) bis an den Randumfang des Deckelteils (5) erstreckt.

9. Verschlussdeckel nach einem der Ansprüche 1 bis 8,
**dadurch gekennzeichnet, dass**
der Verschlussdeckel (1) zwei oder mehr als zwei Klemmelemente (8) mit entsprechendem Knickhebelmechanismus und entsprechend viele Rastelemente (6) aufweist.

10. Verschlussdeckel nach einem der Ansprüche 1 bis 9,
**dadurch gekennzeichnet, dass**
die mit dem Deckelteil (5) verbundenen Abschnitte (8.1) der Klemmelemente (8) zwischen den Rastelementen (6) und beabstandet zu diesen angeordnet sind.
